# EUROPEAN PATENT SPECIFICATION

(11) **EP 1 926 608 B1**
(45) Date of publication and mention of the grant of the patent: **02.05.2012**
(21) Application number: 06742461.4
(22) Date of filing: 13.06.2006
(51) Int. Cl.: B66F 7/08, B60B 29/00, B66F 5/04

(54) **PROCEDURE FOR THE TRANSPORTATION OF TIRES OR CAR WHEELS, WHICH ARE DEMOUNTED FROM A CAR, TO ANOTHER PLACE IN A GARAGE TO BE PROCESSED, AND BACK AGAIN, AND A FRAME FOR THE CARRYING OUT OF THE PROCEDURE**
VERFAHREN ZUM TRANSPORT VON VON EINEM AUTO ABMONTIERTEN REIFEN ODER AUTORÄDERN ZU EINER ANDEREN STELLE IN EINER WERKSTATT ZUR BEARBEITUNG UND WIEDER ZURÜCK UND RAHMEN ZUR DURCHFÜHRUNG DES VERFAHRENS
PROCÉDÉ DE TRANSPORT DE PNEUS OU DE ROUES AUTOMOBILES, APRÈS DÉMONTAGE D UNE AUTOMOBILE, VERS UN AUTRE ENDROIT DU GARAGE POUR TRAITEMENT, ET À NOUVEAU VERS L AUTOMOBILE, ET CHÂSSIS PERMETTANT DE RÉALISER LA PROCÉDURE

(30) Priority: 17.06.2005 DK 200500891
(43) Date of publication of application: 04.06.2008
(73) Proprietor: Pedersen, Mogens Lyngby, 8361 Hasselager (DK)
(72) Inventor: Pedersen, Mogens Lyngby, 8361 Hasselager (DK)
(74) Representative: Hansen, Kaj
(86) International application number: PCT/DK2006/000331
(87) International publication number: WO 2006/133700

(56) References cited:
- EP-A2- 0 125 551
- EP-A2- 0 125 551
- WO-A1-97/10109
- WO-A1-97/10109
- FR-A1- 2 700 301
- FR-A1- 2 764 239
- US-A- 3 937 343
- US-A- 4 042 139

## Description

When tires are to be exchanged on a car, the wheels are demounted and laid on the floor. The wheels must then be lifted and carried to another place in the garage, where the tires are demounted and the new tires mounted, and then they are taken to another place, where the wheels are balanced, and thereafter taken back to the car again.

A solution for improvement of this process is known from document US 3 937 343 that forms the closest prior art. This is a time consuming and cumbersome job.

It is a purpose of the present invention to describe a procedure by which the said disadvantages can be avoided.

This is achieved by the procedure described in claim 1.

Claim 2 describes a preferred embodiment of a frame for the carrying out of the procedure according to claim 1, and

claim 3 describes a preferred embodiment of a vehicle on which the frame according the invention can be mounted.

The invention is explained below in detail with reference to the drawing, in which
- fig. 1: is a side view of a frame according to the invention, which is mounted on a vehicle and has four car wheels arranged in position,
- fig. 2: shows a picture, partially sectional, corresponding to the one in fig. 1, in which the frame is lowered to a level at which it can be swung over to a vertical position,
- fig. 3: shows a picture corresponding to the one in fig.1, in which the frame is swung over to a vertical position,
- fig. 4: shows the frame, seen in the direction of the arrows I-I in fig 1, where the side rails are not gripping the car wheels,

- fig. 5: shows a picture corresponding to the one in fig. 3, in which the side rails are gripping the car wheels,
- fig. 6: is a sectional view of the frame seen in the direction of the arrows II-II in fig. 1 in a position in which the side rails are gripping the car wheels, and
- fig. 7: is a larger-scale view, with certain parts not shown, of a section in the frame and the vehicle seen in the direction of the arrows III-III in fig. 1, and
- fig. 8: is a larger-scale view of a detail D in fig. 4.

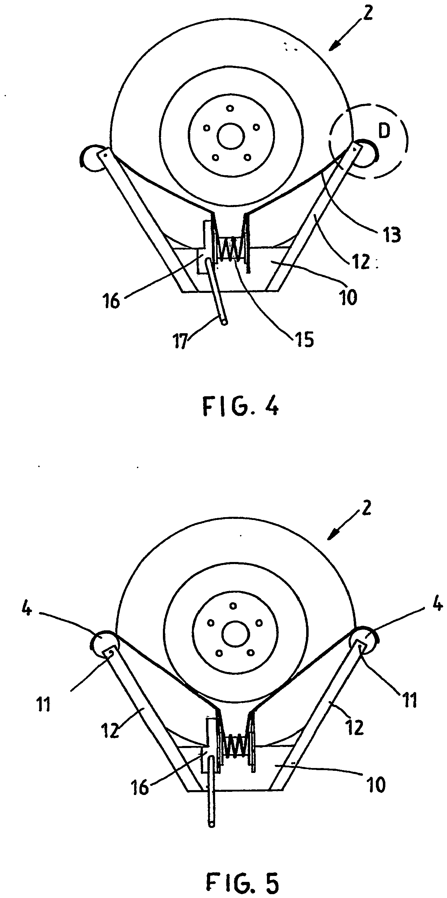

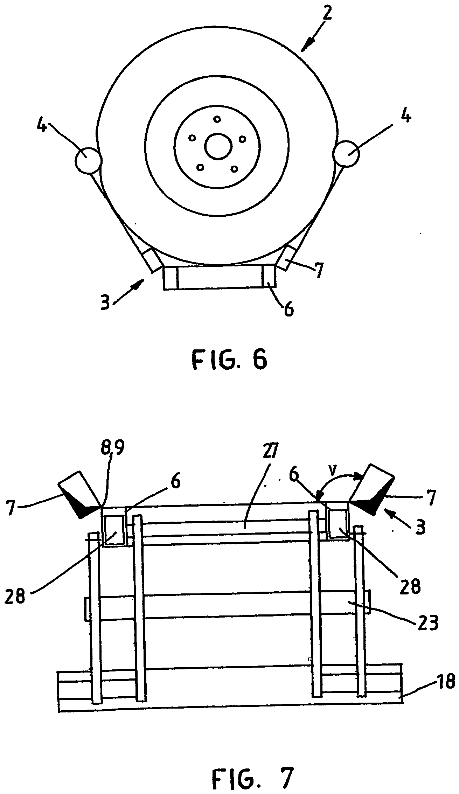

As shown in the drawing, a frame 1 for transportation of car wheels 2 mounted with tires, consists of two - in the initial position - horizontal and mutually parallel bottom rails 3, against which the wheels 2 can rest, and of two side rails 4 positioned above the bottom rails 3, which side rails are positioned approximately level with a central section through the wheels 2 and are mutually parallel and parallel with the bottom rails 3. The side rails 4 function as side guides for the wheels 2, and they can be moved from a position, fig. 4, where they are not gripping the car wheels 2, to a position, figs. 5 and 6, in which they exert a pressure, which is inwardly directed towards the centre of the wheels, on the tires of the wheel 2. The frame 1 is mounted on a vehicle 5. When the wheels 2 are held fast between the side rails 4, the vehicle 5 is moved to another place in the garage, where the wheels are to be further treated. The vehicle 5 and/or the frame 1 are tilted over into a vertical position in which the end of the frame 1 rests against the floor, the side rails 4 are moved back to an initial position, in which the side rails are not gripping the wheels 2, and then the wheels can be taken out of the frame 1 for treatment. The frame 1 is then moved back to the horizontal position, and after completed treatment the wheels 2 are again placed on the frame 1, after which the side rails 4 are brought to another position, in which the wheels 2 are squeezed in position, and the wheels are transported to another place.

As shown in figs. 6 and 7 each bottom rail 3 can consist of a vertical hollow profile 6 at the bottom and of an obliquely oriented hollow profile 7 above the hollow profile 6, which hollow profile 7 can be arranged so that the inner bottom edge 8 rests against the upper outer edge 9 of a hollow profile 6, and the two edges are welded together in a position, in which one side of the profile 7 forms an angle v with the upper side of the profile 6. At the ends the profiles 6 and 7 are mutually connected by a connecting piece 10.

As shown, the side rails 4 can be embodied as tubes, which at each end are eccentrically pivotally hung from pins 11, which are fastened to braces 12, which at the bottom are fastened to the hollow profiles 7.

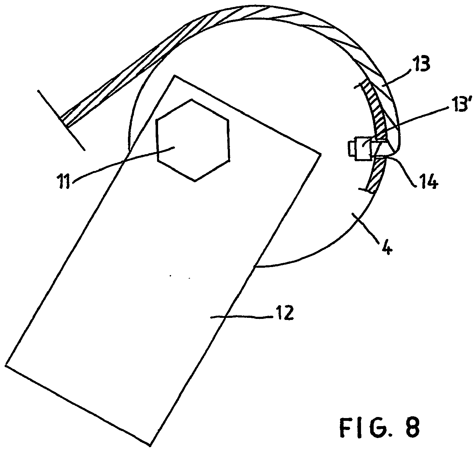

To each tube 4 there is at one end fastened a wire 13, which, as shown in fig. 8, is carried through a hole 14 in the tube and fastened to the internal side of the tube, for example by a clamp 13' squeezed onto the wire.

Each wire is carried on the outside of a tube 4 and down over a wire drum 15, which is turned over a gear 16 by means of a handle 17. By turning the handle 17 in one direction the wires 13 are tightened, so that the tubes 4 are tightened against the tires of the wheels 2. By turning the handle in the opposite direction the wires are slackened, whereby the tubes 4 are released from their grip on the tires.

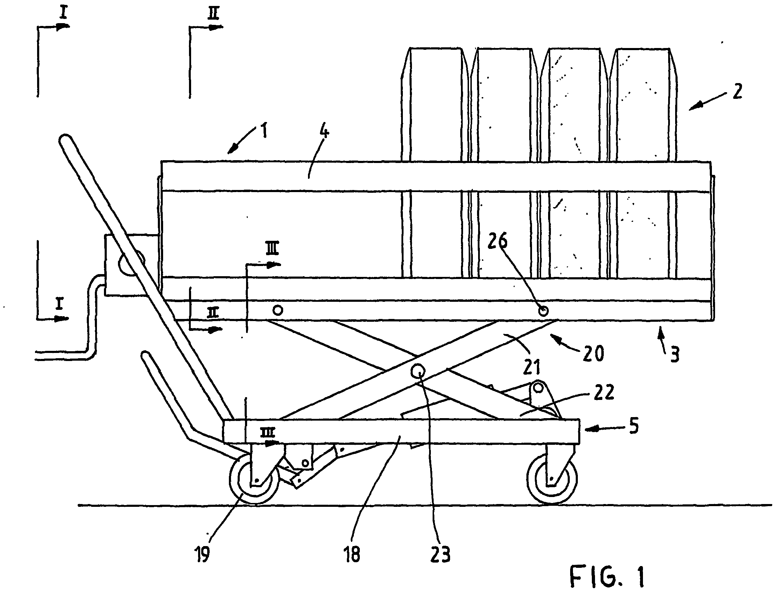

As shown in figs. 1-3 the vehicle 5 can consist of a frame 18 with mounted wheels 19. The frame 18 is mounted with a raising/lowering mechanism, which comprises a jaw-tongs link 20 in each side. Each jaw-tongs link consists of two jaws 21 and 22, which are mutually pivotally connected by a pintle 23 and are pivotally mounted on the frame 18 by pins, respectively 24 and 25. At the upper end the jaws 21 are pivotally hinged to a hollow profile 6 by pins 26. The jaws 22 in each side are at the top end mutually connected, for example, by a cylinder-shaped bar 27, fig. 7, which on each side is carried through a jaw 22, and which at each end outside the jaws 22 is mounted with a roller 28 of such a size, that they can be accommodated and move inside a hollow profile 6.

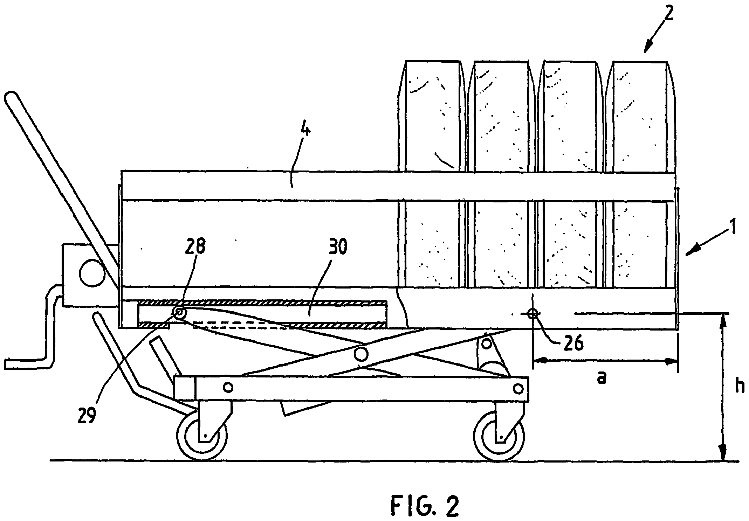

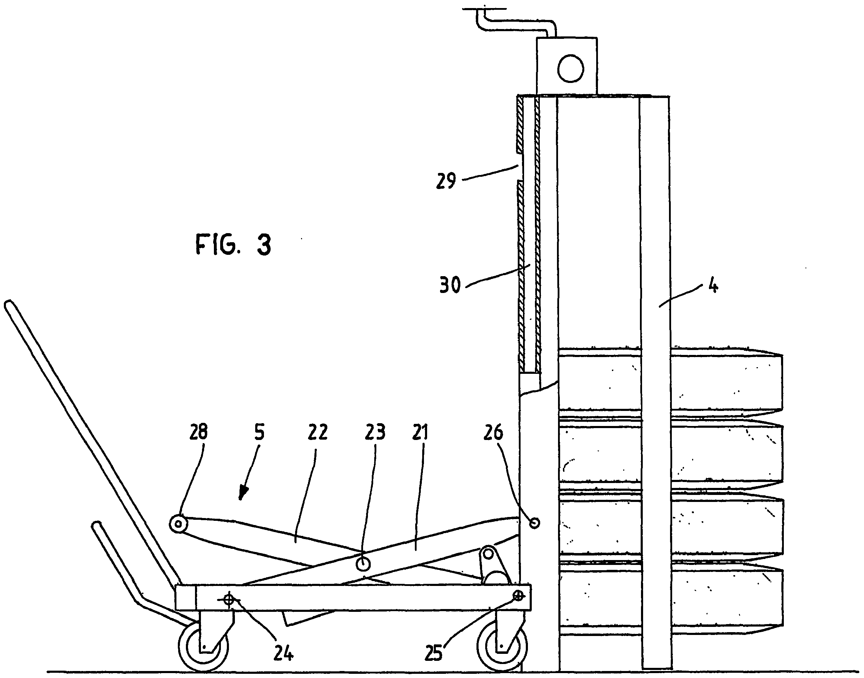

As shown in figs. 2 and 3, the bottom flange of each hollow profile 6 has an opening 29 cut out near the front end of the frame 1, and on the internal side towards the jaw-tongs link 20 of each hollow profile 6, a slit 30 is cut out, which can accommodate an axle pin 27.

As shown in fig. 2, a roller 28 in each side of the jaw-tongs link 20 can be moved in and out of the opening 29, when the rollers 28 in a certain position of the jaw-tongs link 20 - corresponding to a certain height *h* of the pivot pin 26 above the floor - is located abreast of the openings 29. The openings 29 are located so that the height *h* is equal to the distance a from the pins on the rollers 28 to the end of the frame 1, whereby the end of the frame 1 will come to rest against the floor, when the frame 1 is swung over to a vertical position.

Within the scope of the present invention it is possible to imagine various modifications. For example, both the bottom rails 3 as well as the vehicle 5 might be embodied differently.

## Claims

1. Procedure for transportation of tires or of car wheels (2) with mounted tires, which are demounted from a car, to another place in a garage for treatment, for example for exchange of tires, and from there to another place in the garage, or back to the car, whereby
the car wheels (2) are arranged in a vertical position side by side on a frame (1) consisting of two - in an initial position - horizontal or approximately horizontal, mutually parallel bottom rails (3) against which the wheels (2) can come to rest, and of two side rails (4) arranged above the bottom rails (3), which side rails are arranged approximately level with a central section through the wheels (2), and which are mutually parallel and parallel with the bottom rails (3), and which act as side guides for the wheels (2), which said frame (1) is mounted on a vehicle (5), and that the side rails (4) can be moved from an initial position, in which the side rails are not gripping the wheels, and on to another position in which the wheels are squeezed in position between the side rails (4), **characterised by** the fact that the wheels are moved to another place, the frame (1) and/or the vehicle (5) and the frame (1) are tilted over into a vertical position and the side rails (4) are moved back to their initial position, after which the wheels are removed from the frame for treatment, the frame (1) is brought back to its initial position, and the wheels (2), after completed treatment, again are placed on the frame (1), after which the wheels (2) are transported to another place.

2. Frame for the carrying out of the procedure according to claim 1, **characterised by** the fact that
each bottom rail (3) consists of one vertically oriented hollow profile (6) at the bottom, and above the hollow profile of an obliquely oriented second hollow profile (7), which is fastened, for example welded, with its inner bottom edge (8) to the upper outer edge of the hollow profile (9) and forms an obtuse angle (v) with it, that the hollow profiles (6) and (7) in the bottom rails (3) at the ends are mutually connected by connection pieces (10), and that the side rails (4) are embodied as cylinder-shaped tubes, which at each end are eccentrically pivotally hung on pins (11) fastened on braces (12), which at the bottom are fastened to the hollow profiles (7), that to each tube (4) at one end a wire (13) is fastened, which is carried through a hole (14) in the tube and fastened to the internal side of the tube, which hole (14) is placed approximately diametrically opposite the pins (11), which wires (13) are carried on the outside of the tubes (4), and down over a wire drum (15), which over a gear (16), can be turned with a handle (17) - in one direction for the tightening of the tubes (4) against the tires of the wheels (2), and in the opposite direction in order to release the tubes (4) from their grip on the wheels.

3. Vehicle for the carrying out of the procedure according to claim 1, **characterised by** the fact that
the vehicle (5) consists of a frame (18) mounted on wheels (19) on which frame is mounted a raising/lowering mechanism comprising a jaw-tongs link (20) in each side, each consisting of two jaws (21) and (22), which are mutually pivotally connected by a pintle (23), and at their lower end they are pivotally mounted on the frame (18) by pins, respectively (24) and (25), that the jaws (21) at the upper end are pivotally hinged to a hollow profile (6) by pins (26), and that the jaws (22) in each side at their upper end are mutually connected, for example, by a cylinder-shaped bar (27), which is carried through the jaws (22) and at the end, outside the jaws (22), a roller (28) is mounted, which in a certain position of the jaw-tongs link (20) can be carried up through an opening (29), which is shaped in the bottom (6) in each side of the frame (1) and that each hollow profile (6) is embodied with a slit (30) on the internal side, facing the jaw-tongs link (20), which can accommodate an axle pin (27), so that a roller (28) can move each in its own hollow profile (6).

## Patentansprüche

1. Verfahren zum Transportieren von Reifen oder Fahrzeugrädern (2) mit montierten Reifen, die von einem Fahrzeug abmontiert sind, zu einem anderen Ort in einer Werkstatt zwecks Bearbeitung, beispielsweise Reifentausch, und von dort zu einem anderen Ort in der Werkstatt oder zurück zum Fahrzeug, **dadurch gekennzeichnet, dass** die Fahrzeugräder (2) in vertikaler Position nebeneinander auf einem Rahmen (1) angeordnet werden, der aus zwei in einer Ausgangsposition waagerechten oder annähernd waagerechten, gegenseitig parallelen Bodenschienen (3) besteht, an denen die Fahrzeugräder (2) anliegen können, sowie aus zwei über den Bodenschienen (3) angeordneten Seitenschienen (4), die ungefähr in Höhe eines mittigen Schnittes durch die Fahrzeugräder (2) angeordnet sind, und die gegenseitig parallel sowie parallel zu den Bodenschienen (3) angeordnet sind, und die als Seitenführung für die Fahrzeugräder (2) dienen, wobei der Rahmen (1) auf einem Wagen (5) montiert ist und die Seitenschienen (4) sich von einer Ausgangsposition, in der die Seitenschienen (4) außer Eingriff mit den Rädern sind, in eine andere Position bewegen lassen, bei der die Räder zwischen den Seitenschienen (4) festgeklemmt sind, wonach die Räder zu dem anderen Ort gefahren werden, wo der Rahmen (1) und/oder der Wagen (5) sowie der Rahmen (1) in eine senkrechte Position gekippt wird bzw. werden und die Seitenschienen (4) in ihre Ausgangsposition zurückbewegt werden, wonach die Fahrzeugräder zwecks Bearbeitung aus dem Rahmen genommen werden, der Rahmen (1) in seine Ausgangsposition zurückgebracht wird, und die Fahrzeugräder (2) nach abgeschlossener Bearbeitung erneut auf dem Rahmen (1) angeordnet werden, wonach die Fahrzeugräder (2) zu einem anderen Ort transportiert werden.

2. Rahmen zur Durchführung des Verfahrens gemäß Anspruch 1, **dadurch gekennzeichnet, dass**
jede der Bodenschienen (3) unten aus einem senkrecht orientierten Hohlprofil (6) und über dem Hohlprofil aus einem schräg orientierten anderen Hohlprofil (7) besteht, das festgehalten wird, beispielsweise durch Verschweißen der inneren, unteren Kante (8) mit der oberen, äußeren Kante des Hohlprofils (9), wobei ein stumpfer Winkel (v) entsteht, dass die Hohlprofile (6) und (7) in den Bodenschienen (3) an den Enden durch Verbindungsstücke (10) gegenseitig verbunden sind, und dass die Seitenschienen (4) als zylinderförmige Rohre gestaltet sind, die an beiden Enden exzentrisch an Zapfen (11) drehbar aufgehängt sind, die an Schrägstreben (12) befestigt sind, die unten an den Hohlprofilen (7) befestigt sind, dass an jedem Rohr (4) am einen Ende ein Seil (13) befestigt ist, das durch eine Bohrung (14) im Rohr geführt und an der Innenseite des Rohres festgehalten wird, wobei die Bohrung (14) ungefähr diametral entgegengesetzt der Zapfen (11) angeordnet ist, wobei die Seile (13) außen an den Rohren (4) und nach unten über eine Seilwinde (15) geführt sind, die über ein Getriebe (16) mit einer Handkurbel (17) gedreht werden kann - in eine Richtung zum Anziehen der Rohre (4) gegen die Reifen der Fahrzeugräder (2), und in die entgegengesetzte Richtung zur Freigabe der Rohre (4) vom Eingriff mit den Fahrzeugrädern.

3. Wagen zur Durchführung des Verfahrens gemäß Anspruch 1, **dadurch gekennzeichnet, dass**
der Wagen (5) aus einem Rahmen (18) mit montierten Rädern (19) besteht, wobei an diesem Rahmen eine Hubvorrichtung montiert ist, die ein Scherenglied (20) an jeder Seite umfasst, das aus jeweils zwei Armen (21) und (22) besteht, die gegenseitig drehbar mit einem Zapfen (23) verbunden sind und am untere Teil durch Zapfen (24) bzw. (25) drehbar an einem Rahmen (18) montiert sind, dass die Arme (21) am oberen Teil am Hohlprofil (6) durch Zapfen (26) drehbar mit einem Scharnier gelagert sind, und dass die Arme (22) an jeder Seite am oberen Ende gegenseitig beispielsweise mit einer zylinderförmigen Stange (27) verbunden sind, die durch die Arme (22) geführt ist und an deren Ende außerhalb der Arme (22) eine Rolle 28 montiert ist, die in einer bestimmten Position des Scherengliedes (20) nach oben durch eine Öffnung (29) geführt werden kann, die im Boden (6) an jeder Seite des Rahmens (1) ausgebildet ist, und dass jedes Hohlprofil (6) mit einem Schlitz (30) an der Innenseite in Richtung des Scherengliedes (20) ausgebildet ist, das einen Achszapfen (27) aufnehmen kann, so dass sich eine Rolle (28) in jeweils einem Hohlprofil (6) bewegen kann.

## Revendications

1. Procédé pour le déplacement des pneus ou des roues automobiles (2) équipées de pneus, après démontage d'une voiture, vers un autre endroit du garage pour traitement, par exemple le changement des pneus, et depuis cet endroit vers un autre endroit du garage ou vers la voiture,
**caractérisé en ce que**
les roues automobiles (2) sont placées en position verticale côte à côte sur un châssis (1) consistant en deux rails inférieurs (3) mutuellement parallèles, horizontaux ou approximativement horizontaux dans une position initiale, contre lesquels les roues (2) peuvent reposer, et en deux rails latéraux (4) placés au-dessus des rails inférieurs (3) approximativement à la hauteur d'une section centrale des roues (2), et qui sont mutuellement parallèles et parallèles aux rails inférieurs (3), et qui font fonction de guides latéraux pour les roux (2), lequel châssis (1) est monté sur un véhicule (5), et que les rails latéraux (4) peuvent se déplacer d'une position initiale, où ils ne saisissent pas les roues, à une autre position, où les roues sont serrées en position entre les rails latéraux (4), après quoi les roues sont déplacées vers un autre endroit, où le châssis (1) et/ou le véhicule (5) et le châssis (1) sont inclinés dans une position verticale, et où les rails latéraux (4) retrouvent leur position initiale, après quoiles roues sont retirées du châssis pour traitement, le châssis (1) est ramené à sa position initiale, et les roues (2), une fois le traitement terminé, sont ramenées dans le châssis (1), après quoi les roues (2) sont déplacées vers un autre endroit.

2. Châssis pour la mise en oeuvre du procédé selon la revendication 1, **caractérisé en ce que**
chaque rail inférieur (3) consiste en un profilé creux (6) orienté verticalement en bas et au-dessus du profilé creux en un deuxième profilé creux (7) orienté obliquement, et dont l'arête inférieure intérieure (8) est fixée, par exemple soudée, sur l'arête extérieure supérieure du profilé creux (9) et forme un angle obtus (v) avec celui-ci, que les profilés creux (6) et (7) des rails inférieurs (3) sont raccordés mutuellement aux extrémités par des pièces de raccord (10), et que les rails latéraux (4) sont conçus comme des tubes cylindriques montés, à chaque extrémité, de façon excentrique sur des pivots (11) fixés sur des appuis obliques (12) fixées en bas sur les profilés creux (7), qu'une des extrémités de chaque tube (4) est équipée d'un fil (13) qui passe par un trou (14) dans le tube et est fixé sur le côté intérieur du tube, lequel trou (14) est placé approximativement dans le sens diamétralement opposé aux pivots (11), lesquels fils (13) passent sur le côté extérieur des tubes (4) et sur un tambour (15) qui, sur un pignon, peut être tourné avec une poignée (17) - dans un sens pour serrer les tubes (4) contre les pneus des roues (2) et dans le sens inverse pour déplacer les tubes (4) de sorte qu'ils ne soient plus en prise avec les roues.

3. Véhicule pour la mise en oeuvre du procédé selon la revendication 1, **caractérisé en ce que**
le véhicule (5) consiste en un châssis (18) monté sur des roues (19), sur lequel châssis est monté un mécanisme de levage/descente comprenant une articulation à bras (20) de chaque côté consistant chacune en deux bras (21) et (22) reliés de façon pivotante à l'aide d'un pivot (23), et qui sont, à leur extrémité inférieure, montés de façon pivotante sur le châssis (18) à l'aide de pivots, respectivement (24) et (25), qu'à l'extrémité supérieure, les bras (21) sont reliés de manière pivotante à un profilé creux (6) à l'aide de pivots (26), et que les les bras (22) sont reliés mutuellement de chaque côté de leur extrémité supérieure, par exemple à l'aide d'une barre cylindrique (27) qui passe par les bras (22), et qu'à l'extrémité, à l'extérieur des bras (22), est placé un rouleau (28) qui, dans une certaine position de l'articulation à bras (20), peut passer par une ouverture (29) formée dans le fond (6), de chaque côté du châssis (1), et que chaque profilé creux (6) comporte une fente (30) sur le côté intérieur, qui est orientée vers l'articulation à bras (20), pouvant être équipée d'un bout d'arbre (27) permettant à un rouleau (28) de se déplacer dans son propre profilé creux (6).
